# FASCICULE DE BREVET EUROPEEN

(11) **EP 2 364 455 B1**
(45) Date de publication et mention de la délivrance du brevet: **31.08.2016**
(21) Numéro de dépôt: 09764514.7
(22) Date de dépôt: 03.12.2009
(51) Int. Cl.: G01S 7/481, G01S 1/08, G01S 17/66

(54) **TÉLÉMÈTRE**
ENTFERNUNGSMESSER
RANGEFINDER

(30) Priorité: 05.12.2008 FR 0806833
(43) Date de publication de la demande: 14.09.2011
(73) Titulaire: THALES, 92400 Courbevoie (FR)
(72) Inventeur: ROUSSEAU, Pascal, 78220 Viroflay (FR)
(74) Mandataire: Henriot, Marie-Pierre
(86) Numéro de dépôt international: PCT/EP2009/066360
(87) Numéro de publication internationale: WO 2010/063805

(56) Documents cités:
- GB-A- 2 252 398
- US-A- 4 830 485
- US-A1- 2004 004 707
- US-A1- 2004 021 852
- US-B1- 6 323 941

## Description

Le domaine de l'invention est celui de la télémétrie.

Un télémètre permet la mesure de la distance le séparant d'une cible. Un télémètre optique utilise la propagation de la lumière comme moyen de mesure. Le télémètre est composé d'un émetteur et d'un récepteur. Il émet de la lumière en direction de la cible et détecte une fraction de cette lumière retournée par la cible. La distance est obtenue à partir du temps de propagation aller et retour de la lumière à partir de l'émetteur jusqu'au récepteur. L'émission est modulée temporellement. La lumière émise transporte cette modulation jusqu'à la cible. La cible réfléchit ou rétro-diffuse cette lumière. Une fraction de cette lumière retournée transporte la modulation jusqu'au récepteur du télémètre. Cette modulation temporelle permet d'identifier le départ de l'impulsion et l'identification de son retour par le récepteur. Le temps écoulé entre ces deux événements permet de calculer la distance ente le télémètre et la cible à partir de la vitesse de propagation de la lumière dans les milieux traversés.

Suivant les diverses situations la conception de télémètre cherche le meilleur compromis. De nombreux paramètres techniques sont à optimiser : la ou les longueurs d'onde d'émission et leurs largeurs spectrales, la géométrie de l'émission (diamètre et divergence), la géométrie de la réception (diamètre de pupille et champ de réception), et le profil de modulation temporelle. Les compromis prennent aussi en compte les moyens de pointer l'émission et la réception en direction de la cible, et les perturbations générées par les environnements thermiques et mécaniques. Dans certains cas l'émission et la réception partagent la même pupille optique.

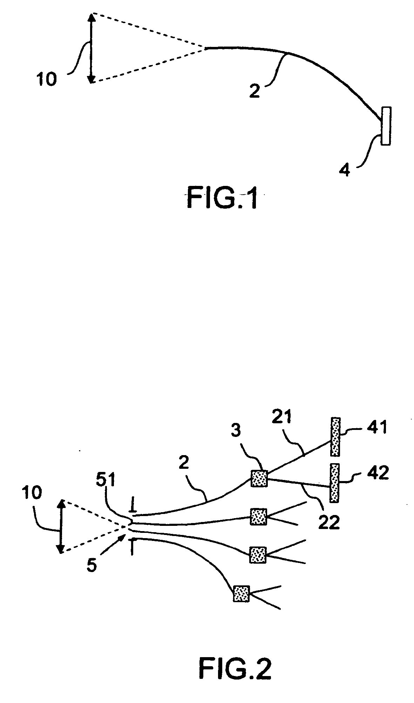

Le schéma typique d'un télémètre comprend :
- un dispositif d'émission qui comprend un émetteur et son optique de mise en forme du faisceau,
- un dispositif de réception montré figure 1 qui comprend une optique 10 de collecte et de focalisation du flux venant de la cible et un détecteur 4. La limitation du champ du récepteur se fait dans le plan de focalisation par la dimension de la zone sensible du détecteur dite zone de détection ou par un système optique de transport de la lumière jusqu'au détecteur (par fibre 2 par exemple). Un filtrage spectral est incorporé dans le trajet.

La fraction de lumière émise, collectée par l'optique du dispositif de réception est très faible. Les voies d'augmentation de performance sont :
- soit être capable de détecter des signaux plus faibles,
- soit augmenter l'éclairement de la cible.

Les solutions actuellement proposées pour détecter un faible flux, relèvent de l'une des catégories suivantes fondées sur :
- une augmentation de la cadence de répétition des impulsions émises qui permet d'utiliser la post-intégration mais dont les principales contraintes sont une augmentation de la taille du laser, de sa consommation électrique et de la durée de mesure,
- une augmentation de la surface de la pupille de réception, celle-ci étant limitée par une contrainte d'encombrement,
- une réduction des sources de bruit. Pour une même technologie de détection, la détection de signaux plus faible est possible. Les sources de bruit sont externes ou internes au télémètre. Le bruit externe est le bruit dont la source est la lumière (éclairement ambiant solaire par exemple) atteignant le détecteur mais qui n'a pas été émise par l'émetteur. Cette source de bruit peut être réduite par une diminution de la largeur spectrale du filtre au détriment de sa transmission et de ses performances en fonction de la température. Les sources internes sont principalement liées aux dimensions de chaque détecteur et de la bande passante nécessaire à la détection de la modulation temporelle. La dimension de la zone de détection détermine le champ de réception. Cette dimension peut être réduite avec pour conséquence une réduction du champ de réception avec le risque de ne plus voir la cible.
- Une augmentation de l'éclairement de la cible. Cette augmentation peut être obtenue par augmentation de la puissance ou de l'énergie fournie par l'émetteur, mais cette énergie est plafonnée par les contraintes de sécurité oculaire, et cette augmentation de l'énergie nécessite un dispositif d'émission plus volumineux.
- Une réduction de la divergence de l'émission augmente la fraction du flux interceptée par une cible plus petite que la tache d'éclairement à son niveau. Ceci intervient aussi lorsqu'une partie seulement de la cible a une contribution significative. Mais la contrepartie est la nécessité de pointer avec précision l'émission du laser sur la cible en particulier lors de télémétrie de cible petite isolée (aérienne par exemple). La ligne de visée du télémètre est le plus souvent orientée à l'aide d'une caméra permettant le maintien de la cible sur la ligne de visée lors de la poursuite de la cible. Dans le cas d'un faisceau à divergence faible qui ne couvre qu'une partie de la cible, on peut se trouver confronté à un autre problème. La ligne de visée du télémètre est rarement en direction de la partie de la cible la plus contributive au sens de la télémétrie. Cette zone retourne la plus grande fraction de l'émission par réflexion ou rétro-diffusion vers la réception. Cette partie n'est pas aisément identifiable dans une image n'utilisant pas l'éclairage de la cible par l'émission de télémètre. Alors, pour éviter une perte dramatique de performance, dès que la ligne de visée n'est pas exactement au meilleur endroit, le moindre mal est de répartir suffisamment l'émission sur la cible c'est-à-dire d'augmenter la divergence du faisceau, au détriment de la portée.

Finalement, la performance de la détection est généralement obtenue au détriment de la portée de détection.

En conséquence, il demeure à ce jour un besoin pour un système donnant simultanément satisfaction à l'ensemble des exigences précitées, à savoir détection d'un faible flux et longue portée de détection.

Parmi les documents de l'état de la technique, on peut aussi citer :
Le document US2004/0021852 qui décrit un système de défense fonctionnant en mode détection IR et en mode ladar (radar laser) 3D à champ de vue variable. Il s'agit d'un imageur passif associé à un télémètre de longueur d'onde différente utilisant la même optique terminale.

Le document US 2004/0004707 qui présente un plan focal monolithique à mode passif IR et mode ladar actif, utilisé pour intercepter des missiles. Il ne comporte pas de dispositif d'émission d'un faisceau laser. De même pour l'assemblage de capteurs décrit dans le document US 6 323 941 et utilisé comme détecteur IR passif et comme ladar actif pour générer des images multi-dimensionnelles.

Le document UK 2 252 398 présente un dispositif de pointage d'une cible mobile basé sur des détecteurs IR ou visible. Ce dispositif n'est pas un télémètre.

Le document US 4 830 485 décrit une caméra 3D basée sur la triangulation, dont les mesures sont obtenues par un codage spatial de la distribution de lumière qui fournit une représentation numérique directe d'une distance ou d'une hauteur.

Mais aucun de ces documents ne répond aux exigences précitées.

Le principe de l'invention repose sur la possibilité apportée au dispositif de réception d'avoir plusieurs modes de fonctionnement sélectionnables :
- un mode dit mode localisation qui permet la détection de la cible avec une grande sensibilité au détriment de la mesure de distance,
- un autre mode dit mode télémétrie qui permet la détection temporelle, pour la mesure de distance.

La détection temporelle a besoin d'un niveau d'écho plus important que la localisation. La détection temporelle est perturbée tant par le bruit lumineux de la scène que par le bruit associé à la bande passante nécessaire pour la précision temporelle et donc pour la précision de distance. La localisation préalable de la cible par le premier mode facilite la détection temporelle de la cible dans un champ plus petit ou avec un éclairement plus important de la cible par une divergence plus faible.

L'invention permet de télémétrer une cible, notamment une petite cible ; elle permet également de localiser la partie la plus efficace d'une cible importante et de télémétrer cette partie.

Plus précisément l'invention a pour objet un télémètre qui comprend un dispositif d'émission d'un faisceau laser et un dispositif de réception des échos laser rétro réfléchis par une cible, comportant une optique frontale focalisant les échos sur une zone de détection qui comporte au moins une zone de détection élémentaire associée à un détecteur individuel à grande bande passante c'est-à-dire une photodiode couplée à un circuit transimpédance, dite détecteur individuel temporel, et des moyens de déport de la zone de détection élémentaire vers ce détecteur individuel temporel. Il est principalement caractérisé en ce que cette zone élémentaire est en outre associée à un détecteur individuel à faible bruit c'est-à-dire une photodiode en intégrateur dite détecteur individuel spatial, et en ce que le dispositif de réception comprend en outre, relié aux moyens de déport, des moyens pour aiguiller le flux reçu par cette zone de détection élémentaire vers le détecteur temporel et/ou vers le détecteur spatial.

Ainsi à tout moment il est possible de choisir, pour chaque zone élémentaire, soit le mode localisation de l'écho, soit le mode mesure de distance ou les deux .

Selon une caractéristique de l'invention, les moyens de déport sont une fibre optique dont l'entrée est située sur la zone de détection élémentaire et la sortie est reliée en entrée aux moyens d'aiguillage et il comprend en sortie des moyens d'aiguillage, deux nouvelles fibres optiques respectivement couplées au détecteur spatial et au détecteur temporel.

Ces moyens d'aiguillage peuvent être des moyens de commutation alternative ou des moyens de répartition d'une fraction du flux reçu vers le détecteur temporel et de la fraction complémentaire du flux vers le détecteur spatial.

Le dispositif de réception comprend éventuellement une matrice de microlentilles placée dans la zone de réception de manière à déporter cette zone de réception sur l'entrée des fibres optiques pour améliorer le couplage du faisceau de fibres optiques avec les échos rétro réfléchis.

Selon une variante de l'invention, les moyens de déport sont un micro miroir situé sur la zone de détection élémentaire et le commutateur est une commande de l'orientation dudit micro miroir de manière à renvoyer les échos de la zone élémentaire vers le détecteur spatial ou vers le détecteur temporel.

La photodiode du détecteur temporel est par exemple une photodiode PIN ou APD.

Le dispositif d'émission laser est un dispositif d'émission continue modulée en amplitude et/ou en fréquence ou un dispositif d'émission d'une ou plusieurs impulsions laser.

L'invention a aussi pour objet un procédé de télémétrie d'une cible au moyen d'un télémètre tel que décrit, caractérisé en ce qu'il comprend :
une étape de localisation de la cible qui comprend les sous-étapes suivantes :
   - émission d'un faisceau laser,
   - détection des échos laser rétro réfléchis par la cible, au moyen des détecteurs spatiaux,
   - réitération des sous-étapes précédentes tant que la cible n'est pas localisée,
une étape de télémétrie de la cible localisée qui comprend les sous-étapes suivantes :
   - émission d'un faisceau laser,
   - détection des échos laser rétro réfléchis par la cible, au moyen des détecteurs temporels.

Selon une caractéristique de l'invention, préalablement à l'émission du faisceau laser de l'étape de télémétrie de la cible localisée, le champ du faisceau laser est réduit.

Eventuellement suite à l'étape de localisation, il comprend une étape d'orientation de la ligne de visée du dispositif d'émission laser sur la cible localisée, préalablement à l'étape de télémétrie.

Selon une caractéristique de l'invention, préalablement à la sous-étape de détection de l'étape de télémétrie de la cible localisée, il comprend une étape de commutation de détecteurs spatiaux vers des détecteurs temporels.

D'autres caractéristiques et avantages de l'invention apparaîtront à la lecture de la description détaillée qui suit, faite à titre d'exemple non limitatif et en référence aux dessins annexés dans lesquels :
la figure 1 déjà décrite représente schématiquement en coupe, un dispositif de détection d'un télémètre selon l'état de la technique,
la figure 2 représente schématiquement en coupe, un exemple de télémètre selon l'invention.

D'une figure à l'autre, les mêmes éléments sont repérés par les mêmes références.

Le télémètre selon l'invention permet de localiser finement la direction d'émission du télémètre. Il permet aussi de localiser la partie la plus efficace de la cible et de télémétrer cette partie.

Il comprend un dispositif d'émission d'un faisceau laser et un dispositif de détection des émissions rétro réfléchies par la cible. Ce dispositif de détection dont un exemple est montré figure 2, comprend une optique frontale 10 qui focalise les échos laser rétro réfléchis par la cible sur une zone de détection 5. Cette zone de détection est décomposée en zones de détection élémentaires 51. Selon l'invention une ou plusieurs de ces zones élémentaires 51 (voire toutes) sont associées via un commutateur 3 à un détecteur temporel 42 et à un détecteur spatial 41. Pour permettre que la même zone élémentaire 51 puisse à la demande être en mode localisation ou en mode télémétrie un déport des détecteurs est effectué.

Le déport de la zone de détection vers les détecteurs individuels peut se faire par micro-miroirs. Ces micro-miroirs aiguillent chaque zone élémentaire 51 vers ses détecteurs dédiés 41, 42. Des micro-miroirs individuellement aptes à être commandés (éventuellement assemblés en matrice) sont disposés dans la zone de détection 5 pour permettre à la demande de les orienter de manière à envoyer la lumière de chaque zone élémentaire 51 vers une détection soit de télémétrie, soit de localisation.

Le déport de la zone de détection vers les détecteurs individuels peut aussi être effectué par fibres optiques 2 dont l'entrée est située au niveau de la zone de détection 5. Chaque fibre 2 est couplée à un détecteur spatial 41 ou à un détecteur temporel 42. Le couplage, vers les détecteurs, de chaque fibre peut être statique ou dans certain cas, un commutateur 3 à la demande aiguille principalement le flux transporté par la fibre vers le détecteur spatial ou le détecteur temporel. Le commutateur peut aussi être fibré : la fibre 2 se divise alors en deux fibres 21, 22 qui sont respectivement couplées à un détecteur spatial 41 et à un détecteur temporel 42.

On peut prévoir de positionner au foyer de l'optique frontale 10, une matrice de microlentilles, au pas du faisceau de fibres, pour maximiser le flux de chaque zone élémentaire 51 couplé dans chaque fibre : une micro lentille est alors associée à une fibre optique 2.

Malgré une légère limitation des performances, pour certaines ou pour chaque zone élémentaire, la commutation alternative entre les deux modes de détection peut être remplacée par une répartition statique. Celle-ci consiste par exemple à aiguiller une fraction fixe du flux vers la localisation et la fraction complémentaire vers la détection de télémétrie. Ceci est réalisé au moyen d'une lame semi-réfléchissante ou par coupleur optique. La valeur de cette fraction fixe peut ne pas être la même suivant la position de la zone élémentaire 51 dans la zone de détection 5.

Finalement le flux reçu par la zone de détection élémentaire 51 peut être :
- aiguillé alternativement vers le détecteur spatial ou le détecteur temporel par un commutateur ou,
- aiguillé par un répartiteur à la fois vers le détecteur spatial qui en reçoit une fraction et vers le détecteur temporel qui reçoit la fraction complémentaire.

Dans la suite on choisit les fibres optiques comme moyens de déport et on se situe dans le cas particulier de la commutation alternative, mais l'exemple s'applique tout aussi bien à d'autres moyens de déport ainsi qu'à la répartition statique.

Selon l'invention, il y a à l'autre extrémité de la fibre optique d'au moins une zone élémentaire, la possibilité de choisir, soit une détection à très faible bruit pour la localisation spatiale de la cible, soit une détection temporelle à grande bande passante permettant de mesurer la distance de la cible. A cet effet, la fibre 2 est connectée à un commutateur 3 (aussi désigné aiguilleur pilotable) vers une fibre 22 couplée à une photodiode optimisée pour la mesure de distance 42 et/ou vers une autre fibre 21 couplée à une photodiode optimisée pour la localisation 41.

Une photodiode optimisée pour la localisation aussi désignée détecteur spatial, est typiquement une photodiode montée dans un circuit intégrateur. Le montage est à très faible bruit. Durant la période d'intégration les charges créées sont stockées puis, après la période d'intégration le circuit de lecture convertit ces charges en un signal proportionnel au nombre de charges collectées. La durée de l'intégration est adaptée au domaine de distance dans lequel peut se trouver la cible. La détection d'un signal très faible est possible tel qu'un signal d'une dizaine de photons.

Pour la mesure de distance, le détecteur doit permettre de repérer temporellement l'arrivée de l'écho. Le détecteur temporel convertit également le flux de photons en un courant. Ce courant est lu en continu par l'intermédiaire d'un circuit transimpédance. Une photodiode dont le montage est optimisé pour la mesure de distance aussi désignée détecteur temporel, est typiquement une photodiode de type PIN ou APD, photodiode à grande bande passante. Sa performance est limitée par le bruit propre du détecteur et du circuit transimpédance associé. La résolution de la modulation temporelle permet une mesure précise de la distance. Une photodiode à avalanche permet d'améliorer le rapport signal à bruit. De quelques centaines à milliers de photons sont nécessaires pour un rapport signal à bruit suffisant pour limiter la probabilité de fausse alarme.

Le niveau du signal détectable par le détecteur temporel est beaucoup plus élevé que celui détectable par le détecteur spatial. Le rapport peut être supérieur à 100.

Ainsi à tout moment il est possible de choisir, pour chaque zone élémentaire, soit le mode localisation de l'écho, soit le mode mesure de distance. Ainsi, lors de télémétrie de petite cible, une seule fibre par exemple est affectée à la télémétrie alors que les autres contrôlent le centrage sur la cible. D'une émission laser à l'autre, le choix de la zone élémentaire associée à la télémétrie peut être modifié. Par ailleurs pour des cibles étendues il est possible d'affecter à la télémétrie plusieurs zones élémentaires pour augmenter la sensibilité.

L'invention permet aussi de localiser précisément les parties les plus contributives de la cible pour avoir une télémétrie encore efficace à plus grande distance. Grâce à cette localisation précise avec le même niveau d'énergie par impulsion, une divergence d'émission plus petite est utilisable. Ainsi l'éclairement des parties les plus intéressantes de la cible peut être augmenté grâce à la diminution de la divergence. Une orientation fine de la direction d'émission est possible à partir des informations de localisation.

Cet arrangement permet aussi de s'affranchir de la dérive relative de la direction d'émission du laser relativement au champ de la réception. L'information d'alignement de la direction de l'émission avec le moyen de pointé et de poursuite du système est disponible à tout moment.

On va à présent décrire le fonctionnement de ce télémètre.

L'émission du faisceau laser peut être une émission continue modulée en amplitude et/ou en fréquence ou une impulsion isolée ou un train d'impulsions.

Pour l'émission de l'étape de localisation, toutes les zones élémentaires 51 sont associées à leur détecteur à très faible bruit 41 (détecteur spatial). Une image de la zone de détection 5 est formée. La localisation de la zone élémentaire ayant le plus d'écho est faite, par comparaison des niveaux d'énergie reçue par les détecteurs à faible bruit ; cette comparaison est par exemple effectuée par une unité de calcul. L'écartométrie entre cette zone et la direction d'émission peut être fournie.

Cette information est transmise au système optronique dans lequel est intégré le télémètre, pour lui permettre de réorienter la direction d'émission du télémètre pour l'émission suivante. Au niveau système, le pilotage de la ligne de visée est affiné. La portion de champ où faire la télémétrie est choisie : est sélectionnée la détection pour télémétrie sur la zone élémentaire correspondante. Les autres zones élémentaires restent couplées à leur détecteur pour localisation 41 pour continuer à assurer leur fonction d'observation spatiale et permettre au système de corriger l'orientation de la ligne de visée du télémètre pour les émissions suivantes.

La détection de l'étape de télémétrie de la cible localisée va permettre de détecter l'arrivée de l'écho et donc de mesurer la distance de la cible. Les détections de localisation par les autres zones élémentaires vont permettre de suivre la direction de la cible.

L'invention permet ainsi de télémétrer dans une partie du champ du télémètre alors que le reste du champ est en observation pour pouvoir fournir une correction d'orientation de la ligne de visée pour l'émission suivante.

On va décrire plus en détail un exemple de réalisation d'un télémètre selon l'invention.

La description est faite dans le cadre d'un télémètre émettant des impulsions laser de l'ordre de 10 ns de largeur et dont la longueur d'onde est par exemple égale à environ 1.5 µm. La zone de détection est divisée en plusieurs zones élémentaires, par exemple 4 x 4 zones élémentaires.

Au foyer de l'optique frontale de collimation, c'est-à-dire au niveau de la zone de détection est placée une petite matrice de lentilles 4x4 par exemple, de sous-champs d'environ 100 µrad dans lesquels sont collectés les photons. Les photons sont ensuite orientés vers les détecteurs par 4 x 4 fibres optiques.

A chaque zone élémentaire est associée une détection optimisée pour la mesure de distance au moyen par exemple d'une photodiode APD et une détection optimisée pour la localisation par exemple une photodiode PIN en intégrateur.

Pour éviter une limitation par le bruit de jour le champ de vue de chaque détecteur de localisation est faible, typiquement inférieur à 100 µrad et la largeur spectrale est faible typiquement inférieure à 20 nm. Le temps d'intégration n'est pas supérieur à 500 µs : il est adapté à la profondeur de recherche en distance souhaitée qui est de l'ordre de 80 km. Le champ de vue de chaque détecteur de télémétrie est le même que celui des détecteurs de localisation.

La direction d'émission du laser est connue ou déjà calibrée par une séquence de télémétrie sur une cible d'opportunité suffisamment uniforme (un champ cultivé par exemple).

Initialement pour l'émission laser de l'étape de localisation, toutes les zones élémentaires sont en mode localisation. La position la plus efficace est calculée par détection et pesée relative des zones élémentaires. Une mesure d'écartométrie est fournie au système intégrant ce télémètre, pour recentrer sur la cible la direction d'émission, ainsi que les détecteurs associés aux zones centrales, dits détecteurs centraux.

Pour l'émission laser de l'étape de télémétrie de la cible localisée, le ou les détecteurs pointés sur la détection la plus efficace, c'est-à-dire sur la direction d'émission du télémètre (en l'occurrence les détecteurs centraux), sont commandés en détection temporelle, les autres détecteurs (en l'occurrence les détecteurs périphériques) restant en mode localisation. La télémétrie est obtenue. L'association des données des détecteurs centraux en télémétrie et des détecteurs périphériques en localisation permet aussi d'élaborer une nouvelle écartométrie.

Les quantités de photons à recevoir pour détecter en télémétrie ou pour localiser sont si différentes que la poursuite peut être entretenue même lorsqu'il n'y a pas de niveau suffisant pour la télémétrie.

## Revendications

1. Télémètre qui comprend un dispositif d'émission d'un faisceau laser et un dispositif de réception des échos laser rétro réfléchis par une cible, comportant une optique frontale focalisant les échos sur une zone de détection décomposée en zones de détection élémentaire dont une au moins est associée à une photodiode couplée à un circuit transimpédance à grande bande passante permettant de mesurer la distance de la cible, dite détecteur individuel temporel des échos laser, des moyens de déport de la zone élémentaire de détection vers le détecteur individuel temporel, **caractérisé en ce que** cette zone élémentaire est en outre associée à une photodiode en intégrateur à très faible bruit pour la localisation spatiale de la cible, dite détecteur individuel spatial des échos laser, qui permet de localiser la partie la plus efficace de la cible, et **en ce que** le dispositif de réception comprend en outre, relié aux moyens de déport, des moyens pour aiguiller le flux reçu par cette zone de détection élémentaire vers le détecteur temporel et/ou vers le détecteur spatial des échos laser, le niveau du signal détectable par le détecteur temporel étant beaucoup plus élevé que celui du détecteur spatial.

2. Télémètre selon la revendication précédente, **caractérisé en ce que** les moyens d'aiguillage sont des moyens de commutation alternative (3).

3. Télémètre selon la revendication 2, **caractérisé en ce que** les moyens de déport sont un micro miroir situé sur la zone de détection élémentaire (51) et **en ce que** le commutateur est une commande de l'orientation dudit micro miroir de manière à renvoyer les échos de la zone élémentaire vers le détecteur spatial (41) ou vers le détecteur temporel (42).

4. Télémètre selon la revendication 1, **caractérisé en ce que** les moyens d'aiguillage sont des moyens de répartition d'une fraction du flux reçu par cette zone de détection élémentaire (51) vers le détecteur temporel (42) et de la fraction complémentaire du flux vers le détecteur spatial (41).

5. Télémètre selon l'une des revendications précédentes, **caractérisé en ce que** les moyens de déport sont une fibre optique (2) dont l'entrée est située sur la zone de détection élémentaire (51) et la sortie est reliée en entrée aux moyens d'aiguillage et **en ce qu'**il comprend en sortie des moyens d'aiguillage, deux nouvelles fibres optiques (21, 22) respectivement couplées au détecteur spatial (41) et au détecteur temporel (42).

6. Télémètre selon l'une des revendications précédentes, **caractérisé en ce que** le dispositif de réception comprend une matrice de microlentilles placée dans la zone de réception de manière à déporter cette zone de réception sur l'entrée des fibres optiques pour améliorer le couplage du faisceau de fibres optiques avec les émissions rétro réfléchies.

7. Télémètre selon l'une des revendications précédentes, **caractérisé en ce que** la photodiode du détecteur temporel (42) est une photodiode PIN ou APD.

8. Télémètre selon l'une des revendications précédentes, **caractérisé en ce que** le dispositif d'émission laser est un dispositif d'émission continue modulée en amplitude et/ou en fréquence ou un dispositif d'émission d'une ou plusieurs impulsions laser.

9. Procédé de télémétrie d'une cible au moyen d'un télémètre selon l'une des revendications précédentes prise en combinaison avec la revendication 2, **caractérisé en ce qu'**il comprend :
- une étape d'émission d'un faisceau laser,
- puis pour chaque zone élémentaire (51) de détection des échos laser associée à un détecteur temporel et à un détecteur spatial, une étape de choix entre un mode de localisation de la cible ou un mode de mesure de distance de la cible,
le mode de localisation de la cible comprenant une étape de détection des échos laser rétro réfléchis par la cible, au moyen d'un détecteur spatial (41) des échos laser,
le mode de mesure de distance de la cible comprenant une étape de détection des échos laser rétro réfléchis par la cible, au moyen d'un détecteur temporel (42) des échos laser.

10. Procédé de télémétrie d'une cible selon la revendication précédente, **caractérisé en ce que** les étapes d'émission puis de choix sont réitérées.

11. Procédé de télémétrie d'une cible au moyen d'un télémètre selon l'une des revendications 1 à 8 prise en combinaison avec la revendication 4, **caractérisé en ce qu'**il comprend une étape d'émission d'un faisceau laser puis pour chaque zone élémentaire de détection des échos laser, une étape de répartition des échos laser en deux fractions, une fraction étant aiguillée vers un détecteur spatial (41) des échos laser en vue d'une localisation de la cible, l'autre fraction étant simultanément aiguillée vers un détecteur temporel (41) des échos laser en vue d'une mesure de distance de la cible.

12. Procédé de télémétrie selon l'une des revendications 9 à 11, **caractérisé en ce que** préalablement à l'émission du faisceau laser, le champ du faisceau laser est réduit.

13. Procédé de télémétrie selon l'une quelconque des revendications 9 à 12, **caractérisé en ce qu'**en mode localisation, il comprend en outre une étape d'orientation de la ligne de visée du dispositif d'émission laser sur la cible localisée.

## Patentansprüche

1. Entfernungsmesser, umfassend eine Sendevoruchtung für einen Laserstrahl und eine Empfangsvorrichtung für die von einem Ziel zurückgeworfenen Laserechos, die eine frontale Optik umfasst, welche die Echos auf einer Erkennungszone bündelt, die in elementare Erkennungszonen unterteilt ist, von denen zumindest eine einer Fotodiode zugeordnet ist, die an eine Transimpedanzschaltung mit großer Bandbreite gekoppelt ist, die es ermöglicht, den Abstand vom Ziel zu messen - genannt individueller Zeitdetektor für Laserechos - , sowie Mittel zur Verlagerung der elementaren Erkennungszone zum individuellen Zeitdetektor, **dadurch gekennzeichnet, dass** diese elementare Zone außerdem einer Fotodiode in einer Integrationsschaltung mit sehr geringem Rauschen für die räumliche Ortung des Ziels zugeordnet ist - genannt individueller Raumdetektor für Laserechos -, die es ermöglicht, den effizientesten Teil des Ziels zu orten, und **dadurch gekennzeichnet dass** die Empfangsvoruchtung außerdem, angeschlossen an die Verlagerungsmittel, Mittel umfasst, um den Strom, der von dieser elementaren Erkennungszone empfangen wird, zum Zeitdetektor und/oder zum Raumdetektor für Laserechos zu lenken, wobei das Niveau des Signals, das der Zeitdetektor erfassen kann, viel höher ist als das Niveau, das der Raumdetektor erfassen kann.

2. Entfernungsmesser gemäß dem vorangehenden Anspruch, **dadurch gekennzeichnet, dass** es sich bei den Lenkmitteln um alternierende Umschaltmittel (3) handelt.

3. Entfernungsmesser nach Anspruch 2, **dadurch gekennzeichnet, dass** es sich bei den Mitteln zur Verlagerung um einen Mikrospiegel handelt, der sich in der elementaren Erkennungszone (51) befindet, und **dadurch gekennzeichnet, dass** es sich beim Umschalter um eine Lagesteuerung des Mikrospiegels handelt, wodurch die Echos der elementaren Zone zum Raumdetektor (41) oder zum Zeitdetektor (42) zurückgeworfen werden.

4. Entfernungsmesser nach Anspruch 1, **dadurch gekennzeichnet, dass** es sich bei den Lenkmitteln um Mittel zur Aufteilung eines Teils des Flusses, der von dieser elementaren Erkennungszone (51) empfangen wird, in Richtung des Zeitdetektors (42) und des restlichen Teils des Flusses in Richtung des Raumdetektors (41) handelt.

5. Entfernungsmesser nach einem der vorangehenden Ansprüche, **dadurch gekennzeichnet, dass** es sich bei den Mitteln zur Verlagerung um einen Lichtwellenleiter (2) handelt, dessen Eingang in der elementaren Erkennungszone (51) liegt und dessen Ausgang am Eingang an die Lenkmittel angeschlossen ist, und **dadurch gekennzeichnet, dass** er am Ausgang Lenkmittel umfasst, zwei neue Lichtwellenleiter (21, 22), die an den Raumdetektor (41) bzw. an den Zeitdetektor (42) angeschlossen sind.

6. Entfernungsmesser nach einem der vorangehenden Ansprüche, **dadurch gekennzeichnet, dass** die Empfangsvorrichtung eine Matrix aus Mikrolinsen umfasst, die so in der Empfangszone angeordnet ist, dass diese Empfangszone an den Eingang der Lichtwellenleiter verlagert wird, um die Kopplung des Lichtwellenleiterbündels mit den reflektierten Aussendungen zu verbessern.

7. Entfernungsmesser nach einem der vorangehenden Ansprüche,
**dadurch gekennzeichnet, dass** es sich bei der Fotodiode des Zeitdetektors (42) um eine PIN- oder APD-Fotodiode handelt.

8. Entfernungsmesser nach einem der vorangehenden Ansprüche, **dadurch gekennzeichnet, dass** es sich bei der Laser-Sendevorrichtung um eine amplituden-und/oder frequenzmodulierte, kontinuierliche Sendevorrichtung oder um eine Sendevorrichtung für einen oder mehrere Laserimpulse handelt.

9. Verfahren zur Entfernungsmessung eines Ziels mithilfe eines Entfernungsmessers gemäß einem der vorangehenden Ansprüche in Verbindung mit dem Anspruch 2, **dadurch gekennzeichnet, dass** es die folgenden Schritte umfasst:
- einen Schritt zur Entsendung eines Laserstrahls,
- und anschließend, für jede elementare Erkennungszone (51) für die Laserechos, die einem Zeitdetektor und einem Raumdetektor zugeordnet ist, einen Schritt zur Auswahl zwischen einem Modus zur räumlichen Ortung des Ziels und einem Modus zur Entfernungsmessung des Ziels,
wobei der Modus zur räumlichen Ortung des Ziels einen Schritt zur Erkennung der vom Ziel zurückgeworfenen Laserechos mit Hilfe eines Raumdetektors (41) für Laserechos umfasst,
wobei der Modus zur Entfernungsmessung des Ziels einen Schritt zur Erkennung der vom Ziel zurückgeworfenen Laserechos mit Hilfe eines Zeitdetektors (42) für Laserechos umfasst,

10. Verfahren zur Entfernungsmessung eines Ziels gemäß dem vorangehenden Anspruch, **dadurch gekennzeichnet, dass** der Schritt zur Entsendung und der anschließende Schritt zur Auswahl wiederholt werden.

11. Verfahren zur Entfernungsmessung eines Ziels mithilfe eines Entfernungsmessers gemäß einem der Ansprüche 1 bis 8 in Verbindung mit dem Anspruch 4, **dadurch gekennzeichnet, dass** es einen Schritt zur Entsendung eines Laserstrahls und anschließend, für jede elementare Erkennungszone für die zurückgeworfenen Laserechos, einen Schritt zur Aufteilung der Laserechos in zwei Teile umfasst, wobei ein Teil zu einem Raumdetektor (41) für die Laserechos zur räumlichen Ortung des Ziels und der andere Teil gleichzeitig zu einem Zeitdetektor (41) für die Laserechos zur Entfernungsmessung des Ziels gelenkt wird.

12. Verfahren zur Entfernungsmessung gemäß einem der Ansprüche 9 bis 11, **dadurch gekennzeichnet, dass** vor der Entsendung des Laserstrahls das Feld des Laserstrahls verkleinert wird.

13. Verfahren zur Entfernungsmessung gemäß einem der Ansprüche 9 bis 12, **dadurch gekennzeichnet, dass** es im Ortungsmodus außerdem einen Schritt zur Ausrichtung der Visierlinie der Laser-Sendevoruchtung auf das geortete Ziel umfasst.

## Claims

1. A rangefinder that comprises a device for emitting a laser beam and a device for receiving laser echoes backscattered by a target, comprising a front optic focusing the echoes on a detection zone divided into elementary detection zones, at least one of which is associated with a photodiode, called temporal individual laser echo detector, coupled to a high bandwidth transimpedance circuit allowing the range of the target to be measured, and means for moving the elementary detection zone towards the temporal individual detector, **characterised in that** said elementary zone is also associated with a photodiode, called spatial individual laser echo detector, with a very low noise integrator for spatially locating said target, which photodiode allows the most effective part of said target to be located, and **in that** said reception device further comprises, connected to said movement means, means for switching the stream received by said elementary detection zone towards the temporal detector and/or towards the spatial laser echo detector, the level of the signal that can be detected by the temporal detector being much higher than that of the spatial detector.

2. The rangefinder according to the preceding claim, **characterised in that** said switching means are alternating switching means (3).

3. The rangefinder according to claim 2, **characterised in that** said movement means are a micro-mirror located on said elementary detection zone (51) and **in that** the switch is a command for orienting said micro-mirror so as to send the echoes from said elementary zone towards said spatial detector (41) or towards said temporal detector (42).

4. The rangefinder according to claim 1, **characterised in that** said switching means are means for distributing a fraction of the stream received by said elementary detection zone (51) towards said temporal detector (42) and the additional fraction of the stream towards said spatial detector (41).

5. The rangefinder according to any one of the preceding claims, **characterised in that** said movement means are an optical fibre (2), the input of which is located on said elementary detection zone (51) and the output of which is connected to the input of said switching means, and **in that** it comprises, at the output of said switching means, two new optical fibres (21, 22) that are respectively coupled to said spatial detector (41) and to said temporal detector (42).

6. The rangefinder according to any one of the preceding claims, **characterised in that** said reception device comprises a matrix of micro-lenses placed in said reception zone so as to move said reception zone to the input of the optical fibres in order to improve the coupling of the beam of optical fibres with the backscattered emissions.

7. The rangefinder according to any one of the preceding claims, **characterised in that** said photodiode of said temporal detector (42) is a PIN or APD photodiode.

8. The rangefinder according to any one of the preceding claims, **characterised in that** said laser emission device is an amplitude- and/or frequency-modulated continuous emission device or a device for emitting one or more laser pulses.

9. A method for range finding a target by means of a rangefinder according to any one of the preceding claims in combination with claim 2, **characterised in that** it comprises:
- a step of emitting a laser beam;
- then a step of selecting, for each elementary zone (51) for detecting laser echoes associated with a temporal detector and with a spatial detector, between a mode for locating said target or a mode for measuring the range of said target,
said mode for locating said target comprising a step of detecting laser echoes backscattered by said target by means of a spatial laser echo detector (41),
said mode for measuring the range of said target comprising a step of detecting laser echoes backscattered by said target by means of a temporal laser echo detector (42).

10. The method for range finding a target according to the preceding claim, **characterised in that** said emission and selection steps are repeated.

11. The method for range finding a target by means of a rangefinder according to any one of claims 1 to 8 in combination with claim 4, **characterised in that** it comprises a step of emitting a laser beam then, for each elementary laser echo detection zone, a step of dividing laser echoes into two fractions, one fraction being switched towards a spatial laser echo detector (41) with a view to locating said target, the other fraction being simultaneously switched towards a temporal laser echo detector (41) with a view to measuring the range of said target.

12. The range finding method according to any one of claims 9 to 11, **characterised in that** the field of the laser beam is reduced before the laser beam is emitted.

13. The method for range finding according to any one of claims 9 to 12, **characterised in that**, in location mode, it further comprises a step of orienting the line of sight of said laser emission device on the located target.
